(19) Europäisches Patentamt
European Patent Office
Office européen des brevets

(11) **EP 1 968 139 A2**

(12) **EUROPEAN PATENT APPLICATION**

(43) Date of publication:
**10.09.2008 Bulletin 2008/37**

(51) Int Cl.:
***H01M 4/52*** (2006.01)  ***H01M 10/36*** (2006.01)

(21) Application number: **08352006.4**

(22) Date of filing: **29.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.03.2007 JP 2007052268**

(71) Applicants:
• **Sumitomo Metal Mining Co., Ltd.**
**Tokyo 105-0004 (JP)**
• **Toyota Jidosha Kabushiki Kaisha**
**Toyota-shi, Aichi-ken 471-8571 (JP)**

(72) Inventors:
• **Kuzuo, Ryuuichi**
**Niihama-shi**
**Ehime-ken 792-0002 (JP)**

• **Fukui, Atsushi**
**Niihama-shi**
**Ehime-ken 792-0002 (JP)**
• **Kase, Katsuya**
**Niihama-shi**
**Ehime-ken 792-0002 (JP)**
• **Ueki, Tomoyoshi**
**Toyota-shi**
**Aishi-ken 471-8571 (JP)**
• **Okawa, Kazuhiro**
**Toyota-shi**
**Aishi-ken 471-8571 (JP)**
• **Oda, Syuhei**
**Toyota-shi**
**Aishi-ken 471-8571 (JP)**

(74) Representative: **Morelle, Guy Georges Alain**
**Cabinet Morelle & Bardou S.C.**
**9 Avenue de l'Europe**
**B.P. 72253**
**31522 Ramonville Cedex (FR)**

(54) **Positive electrode active material for non-aqueous electrolyte secondary battery and non-aqueous electrolyte secondary battery**

(57)    To provide a positive electrode active material for a non-aqueous electrolyte secondary battery, which can achieve high capacity and high output simultaneously, and a non-aqueous electrolyte secondary battery using the same. A non-aqueous electrolyte secondary battery is obtained by using as a positive electrode, a positive electrode active material for a non-aqueous electrolyte secondary battery, which is expressed by the general formula: $Li_x(Ni_{1-y}Co_y)_{1-z}M_zO_2$ ($0.98 \leq x \leq 1.10$, $0.05 \leq y \leq 0.4$, $0.01 \leq z \leq 0.2$, M = at least one element selected from the group of Al, Zn, Ti and Mg), and which has a Li site occupancy of the Li site in crystal of 98.5% or more, and a metal site occupancy of the metal site of from 95% to 98% inclusive, obtained by Rietveld analysis.

EP 1 968 139 A2

**Description**

Technical Field

The present invention relates to a non-aqueous electrolyte secondary battery, and in particular to a positive electrode active material comprising a lithium-nickel complex oxide, which is used as a positive electrode material for the non-aqueous electrolyte secondary battery.

Background Art

Since a lithium secondary battery, which is a non-aqueous electrolyte secondary battery, has a small size and high capacity, it is used as a power source for small mobile equipment such as cellular telephones, notebook type personal computers, video camcorders, and personal digital assistants (PDA). Moreover, research and development is progressing, aiming at installation in vehicles represented by hybrid cars. Under such a background, higher output characteristics as well as higher capacity and higher safety are required for the lithium secondary battery.

Lithium-nickel complex oxide (LNO), which is one of the positive electrode materials for the lithium secondary battery, has advantages in that it has a higher capacity than that of lithium-cobalt complex oxide (LCO), which is currently mainstream, and nickel as a raw material is cheaper than cobalt and is available in stable supply. Therefore, lithium-nickel complex oxide is expected to be the next-generation positive electrode material, and research and development thereof is being actively performed.

In the lithium secondary battery, at the time of charging, lithium dissolves into an electrolyte from the positive electrode active material constituting the positive electrode, passes through the separator, and gets between negative electrode layers that can hold lithium, for example, graphite layers. At the time of discharging, a reaction opposite thereto occurs, in which lithium comes out from the negative electrode, passes through the separator, and returns to a lithium site in a lithium layer in the positive electrode active material. Thus, in the lithium secondary battery, lithium comes and goes between the positive electrode and the negative electrode in a form of lithium ions at the time of charging and discharging.

Particularly, when the lithium secondary battery is installed in a vehicle, one of the important characteristics is that it has high output in addition to high capacity. However, with respect to the lithium secondary battery using the LNO, while an approach to high capacity has been conventionally made, an approach to high output has not been made.

For example, in Japanese Patent Application Publication No. 2000-30693, it is described that in the LNO expressed by the general formula: $Li(Ni_{1-x-y}Co_xAl_y)O_2$ (0<x≤0.20, 0<y≤0.15), a high initial capacity can be obtained by setting a Li site occupancy of the Li site in crystal obtained by Rietveld analysis to 97% or more, and a mean particle diameter of the primary particles to a specific value.

Moreover, in Japanese Patent Application Publication No. 2004-171961, it is described that in the LNO expressed by the general formula: $Li_x(Ni_{1-y}Co_y)_{1-z}M_zO_2$ (0.98≤x≤1.10, 0.50<y≤0.4, 0.01≤z≤0.2, M = at least one element selected from the group of Al, Zn, Ti and Mg), the initial capacity can be improved similarly by setting the Li site occupancy obtained by Rietveld analysis to 98% or more, and the mean particle diameter to a specific value.

However, in any of these methods, the object thereof is to improve the initial capacity, not to achieve high output.

Furthermore, in Japanese Patent Application Publication No. 2006-107845, it is described that in the LNO expressed by the general formula: $Li(Ni_{1-x-y-z}Co_xMn_yLi_z)O_2$, a positive electrode active material having excellent thermal stability and high charging and discharging capacity can be obtained by satisfying 0≤x≤0.25-3z, 0.15+2z≤y≤0.35+2z, z≤0.05, and setting a contamination rate of metal ions in the Li site to 0.05. In other words, the battery characteristic is improved by setting the Li site occupancy of the Li site to 95% or more, and the metal site occupancy of the metal site to 95% or more. However, even in such a positive electrode active material, it is not intended to achieve high output. Moreover, since it is a system added with Mn in a large amount, a high battery capacity can be hardly obtained in the non-aqueous electrolyte secondary battery.

As described above, a study for obtaining high capacity has been performed, but a study for obtaining high output has not been performed. Therefore, development of the positive electrode active material for a non-aqueous electrolyte secondary battery that can achieve high capacity and high output, and a non-aqueous electrolyte secondary battery using the same has been highly desired.

[Patent Document 1] Japanese Patent Application Publication No. 2000-30693
[Patent Document 2] Japanese Patent Application Publication No. 2004-171961
[Patent Document 3] Japanese Patent Application Publication No. 2006-107845

<u>Disclosure of the Invention</u>

<u>Problems to be Solved by the Invention</u>

It is an object of the present invention to provide a positive electrode active material for a non-aqueous electrolyte secondary battery that can achieve high capacity and high output simultaneously, and a non-aqueous electrolyte secondary battery using the same.

<u>Means of Solving the Problems</u>

The present inventor has made an intensive study for achieving high capacity and high output of a non-aqueous electrolyte secondary battery. As a result of the study, it is found that high capacity and high output can be achieved simultaneously by setting the Li site occupancy and the metal site occupancy in the lithium-nickel complex oxide (LNO) having a specific composition, to a specific value, thereby completing the present invention.

The positive electrode active material for a non-aqueous electrolyte secondary battery of the present invention is expressed by the general formula: $Li_xNi_{1-y}Co_y)_{1-z}M_zO_2$ ($0.98 \leq x \leq 1.10$, $0.05 \leq y \leq 0.4$, $0.01 \leq z \leq 0.2$, M = at least one element selected from the group of Al, Zn, Ti and Mg), and has a Li site occupancy of the Li site in crystal of 98.5% or more, and a metal site occupancy of the metal site in crystal of from 95% to 98% inclusive, obtained by Rietveld analysis of X-ray diffraction pattern.

The non-aqueous electrolyte secondary battery of the present invention uses the positive electrode active material for the non-aqueous electrolyte secondary battery as a positive electrode.

<u>Effects of the Invention</u>

The positive electrode active material for a non-aqueous electrolyte secondary battery according to the present invention can achieve high capacity and high output simultaneously, and the non-aqueous electrolyte secondary battery using the positive electrode active material as the positive electrode is suitable for being installed in a vehicle. Accordingly, the industrial value of the present invention is very large.

<u>Best Mode for Carrying Out the Invention</u> .

(1) Positive electrode active material

The positive electrode active material for a non-aqueous electrolyte secondary battery of the present invention is a lithium/nickel complex oxide (LNO) expressed by the general formula: $Li_x(Ni_{1-y}Co_y)_{1-z}M_zO_2$ ($0.98 \leq x \leq 1.10$, $0.05 \leq y \leq 0.4$, $0.01 \leq z \leq 0.2$, M= at least one element selected from the group of Al, Zn, Ti and Mg), which has a Li site occupancy of the Li site in crystal of 98.5% or more, and has a metal site occupancy of the metal site in crystal of from 95% to 98% inclusive, obtained by Rietveld analysis. Hereunder is a detailed description for each component.

a) Co

Co in the LNO contributes to an improvement in cycle characteristics. However, when a value of "y" is smaller than 0.05, sufficient cycle characteristics cannot be obtained, and a capacity maintenance factor also decreases. When the value of "y" exceeds 0.4, an initial discharge capacity decreases extremely. Moreover, the amount of expensive Co increases, thereby making the positive electrode active material unpractical in view of cost.

b) M

M, being an additional element, is at least one element selected from the group of Al, Zn, Ti and Mg. When M is uniformly diffused in the crystal of the LNO, the crystal structure of the LNO is stabilized. Accordingly, thermal stability of the non-aqueous electrolyte secondary battery can be increased. When "z" indicating an addition is less than 0.01, stabilization of the crystal structure is not observed. When "z" exceeds 0.2, stabilization of the crystal structure is improved further, but an initial discharge capacity decreases becomes extremely, and hence, it is not desired.

c) Output characteristic parameters other than of elements

In the present invention, the Li site occupancy and the metal site occupancy are specified for the LNO.

c-1) Li site occupancy

The Li site occupancy indicates a proportion of Li atoms occupying the LNO crystal having a layered rocksalt structure, that is, the Li site in an Li layer in $LiNiO_2$.

Metallic oxide including Li usually has a non-stoichiometric composition. When the Li site occupancy is low, there is high possibility that Li atoms present in the Li site are less, metal atoms of Ni, Co and M (M = Al, Zn, Ti and Mg) are present in the Li site, and in many cases, Li usually comes out of the crystal system and is present in a form of lithium carbonate or the like. Therefore, metallic oxide including Li is imperfect as LNO crystal, and does not become a positive electrode active material for a non-aqueous electrolyte secondary battery having sufficient capacity and good cycle characteristic.

Moreover if metal atoms remain in the Li site as a defect, the remaining metal atoms obstruct diffusion of Li in the Li layer, which becomes a resistance, thereby causing a drop in output at the time of being used in the battery.

Thus, as the Li site occupancy becomes higher, the initial capacity becomes higher, and the output characteristic is improved. In the LNO used as the positive electrode active material of the present invention, therefore, the Li site occupancy is set to 98.5% or more. If the Li site occupancy is set to less than 98.5%, sufficient initial capacity cannot be obtained. The upper limit of the Li site occupancy is not particularly limited, and it is preferable that the Li site occupancy is 99% or more, and there is no problem if the Li site occupancy is 100%, that is, Li is present in all the Li sites.

Here, the Li site occupancy is calculated by using the Rietveld analysis. The Rietveld analysis is a method in which a crystal structure model is assumed, and various parameters of the crystal structure (lattice constant, Li site occupancy, and the like) are refined so that an X-ray diffraction pattern derived from the structure of the crystal structure model matches with the actually measured X-ray diffraction pattern.

c-2) Metal site occupancy

The metal site occupancy indicates a proportion of metal atoms other than Li atoms occupying a metal site in the metal layer in $LiNiO_2$. An electron conductivity of LNO is improved by the presence of some Li atoms in the metal site. However, when the metal site occupancy is below 95%, Li atoms which should originally occupy the Li site are present in the metal site instead of the metal atoms, and hence, the Li site occupancy decreases. On the other hand, when the metal site occupancy is higher than 98%, crystallinity is improved, but the electron conductivity is deteriorated and the resistance becomes high due to an electrically saturated state. In the present invention, therefore, the metal site occupancy is set to 95% to 98% inclusive. It is preferable to set the metal site occupancy to 97% to 98%.

To obtain a non-aqueous electrolyte secondary battery having a higher battery capacity and output characteristics, the positive electrode active material has to be a LNO that maintains the Li site occupancy and the metal site occupancy in an optimum condition. In the present invention, by setting the Li site occupancy to 98.5% or more, a high battery capacity is ensured, and a diffusion route of Li is ensured to decrease the resistance, and by setting the metal site occupancy to 95% to 98% inclusive, Li (monovalent) is allowed to be present in the metal layer (trivalent) to improve conductivity by divalent.

By using the LNO for the positive electrode active material, Li diffusion is improved and excellent electron conductivity can be obtained. Therefore resistance is low, and a non-aqueous electrolyte secondary battery having high battery capacity and high output characteristic can be obtained.

c-3) Powder characteristics

In the present invention, it is preferable that the LNO is in a form of spherical secondary particles in which primary particles are aggregated. Moreover it is preferable that the mean particle diameter of the secondary particles is 5 to 15 $\mu$m. When the mean particle diameter is smaller than 5 $\mu$m, a tap density decreases and the battery capacity per unit mass decreases. When the mean particle diameter is larger than 15$\mu$m, diffusion of Li in the particles does not progress, and availability of the positive electrode active material drops. A laser scattering-type particle size distribution measuring apparatus is used for measuring the mean particle diameter.

(2) Manufacturing method for positive electrode active material

At first, spherical secondary particles of nickel-containing hydroxide expressed by $(Ni_{1-y}Co_y)_{1-z}M_z(OH)_2$ (0.98≤x≤1.10, 0.05≤y≤0.4, 0.01≤z≤0.2, M = at least one element selected from the group of Al, Zn, Ti and Mg) are obtained. Manufacturing of the nickel-containing hydroxide is performed in the following manner.

Nickel-cobalt-M salt solution with salt level being adjusted, a complexing agent forming the salt solution and complex salt, and alkali metal hydroxide are supplied respectively continuously to a reaction vessel to generate nickel-cobalt-M complex salt.

Next the complex salt is decomposed by alkali metal hydroxide to precipitate nickel-cobalt-M hydroxide, generation and decomposition of the complex salt are repeated while circulating the complex salt in the vessel, and nickel-cobalt-M hydroxide having a substantially spherical particle shape is overflowed and taken out. M-containing solution can be supplied separate from the nickel-cobalt salt solution. Alternatively, nickel-cobalt hydroxide obtained in the same manner by using the nickel-cobalt salt solution may be returned to a slurry form again, and after adding M-containing compound to the slurry, pH adjustment may be performed, to thereby obtain nickel-cobalt-M hydroxide.

Then, the obtained nickel-containing hydroxide is roasted to obtain an oxide. The roasting temperature is preferably from 300 to 800°C. Since the temperature at which crystal water of the hydroxide evaporates is 280°C, the lower limit temperature needs only to be a temperature exceeding 280°C, but to completely evaporate the water content, 300°C or more is required. Moreover if the temperature exceeds 800°C, primary particles in the hydroxide grow, and when lithium compound is mixed therein and baked, sintering proceeds, and pulverization is required, which is not preferable. The roasting atmosphere can be an oxidizing atmosphere, and an air atmosphere is preferable.

By mixing the obtained oxide with the lithium compound and baking the mixture, the positive electrode active material for the non-aqueous electrolyte secondary battery of the present invention can be obtained.

Here, it is preferable to mix the obtained oxide with the lithium compound so that a molar ratio of Li in the lithium compound and metal elements in the oxide is Li/metal elements = 1.06 to 1.1. By setting the molar ratio of the metal elements and Li to this range, the Li site occupancy can be made 98.5% or more, and the metal site occupancy can be made 95 to 98% inclusive. If the molar ratio of the metal elements and Li is less than 1.06, the metal site occupancy exceeds 98%, thereby decreasing the electron conductivity of LNO, leading to high resistance. Moreover if the molar ratio exceeds 1.1, excess lithium forms a lithium compound and is present on the surface of the particles, thereby causing a decrease of capacity.

The lithium compound is not particularly limited, but is preferably lithium hydroxide, lithium carbonate, lithium nitrate or hydrates thereof, and lithium hydroxide that can be handled easily industrially is more preferable.

Mixing of the oxide and the lithium compound can be performed by a generally used mixer, and for example, a shaker mixer can be used. Equipment used for baking is not particularly limited, but it is preferable to use one in which carbon is not mixed as impurities.

The baking temperature is preferably from 650 to 800°C. If the baking temperature is lower than 650°C, diffusion of Li is insufficient, thereby decreasing the Li site occupancy and the battery capacity. If the baking temperature exceeds 800°C, secondary particles are sintered, and hence, preferable powder characteristics may not be obtained. The baking atmosphere needs only to be an oxidizing atmosphere, but an oxygen atmosphere is preferable.

According to the above manufacturing method, LNO can be obtained. However, the secondary particles may be aggregated due to baking, and hence, it is preferable to break and crush the secondary particles as required. Moreover the excess lithium compound adhered to the surface can be removed by washing after baking.

(3) Non-aqueous electrolyte secondary battery

The non-aqueous electrolyte secondary battery of the present invention includes a positive electrode, a negative electrode, and a non-aqueous electrolyte, and is formed of the same components as those of the general non-aqueous electrolyte secondary battery. Embodiments described below are only examples, and the non-aqueous electrolyte secondary battery of the present invention can be implemented in a form variously changed and improved based on the knowledge of persons skilled in the art, based on the embodiments described in the specification. Moreover, the application of the non-aqueous electrolyte secondary battery of the present invention is not particularly limited.

(a) Positive electrode

The positive electrode active material obtained in the above described manner is used to manufacture the positive electrode of a non-aqueous electrolyte secondary battery, for example, in the following manner.

At first, a powdery positive electrode active material, a conductive material and a binding agent are mixed together, and as required, active carbon and a solvent for viscosity control are added thereto and kneaded to prepare a positive electrode mixture paste. A mixing ratio thereof in the positive electrode mixture paste also becomes an important element for determining the performance of the non-aqueous electrolyte secondary battery. When a total mass of a solid portion of the positive electrode mixture excluding the solvent is assumed to be 100 parts by mass, then similarly to the positive electrode for the general non-aqueous electrolyte secondary battery, it is desired to set a content of the positive electrode active material to 60 to 95 parts by mass, a content of the conductive material to 1 to 20 parts by mass, and a content of the binding agent to 1 to 20 parts by mass.

The obtained positive electrode mixture paste is applied, for example, on the surface of a collector made of aluminum foil, and dried to disperse the solvent. As required, the positive electrode mixture paste may be pressed by a roll press or the like in order to improve the electrode density. A sheet-like positive electrode can be prepared in this manner. The sheet-like positive electrode can be cut into sizes appropriate for the intended battery to manufacture the battery. However, the manufacturing method of the positive electrode is not limited to the one illustrated herein, and other methods can be used.

In manufacturing the positive electrode, for example, graphite (natural graphite, artificial graphite, and expanded graphite) and carbon black materials such as acetylene black and ketjen black can be used as the conductive material.

The binding agent helps to anchor the active material particles, and for example, polyvinylidine fluoride (PVDF), polytetrafluoroethylene (PTFE), fluoro rubber (EPDM), ethylene propylene diene monomer rubber, styrene-butadiene, cellulose resin, polyacrylic acid, and the like can be used.

As required, the positive electrode active material, the conductive material, and the active carbon are dispersed, and a solvent for dissolving the binding agent is added to the positive electrode mixture. Specifically, an organic solvent such as N-methyl-2-pyrolidone can be used as the solvent. Moreover, active carbon can be added to the positive electrode mixture in order to increase the capacity of an electric double layer.

(b) Negative electrode

For the negative electrode, there is used metal lithium, lithium alloy or a material which is obtained by: mixing the binding agent in a negative electrode active material that can occlude and desorb lithium ions; adding an appropriate solvent thereto to obtain a paste-like negative electrode mixture, and applying the negative electrode mixture on the surface of a metal foil collector, for example, made of copper, and drying; and as required, compressing the negative electrode mixture for improving the electrode density.

For the negative electrode active material, for example, natural graphite, artificial graphite, an organic compound-burned substance such as phenolic resin, and a powdery body of carbon substance such as coke can be used. In this case, a fluorine-containing resin such as PVD can be used as a negative electrode binding agent as in the positive electrode. For the solvent for dispersing these active materials and the binding agent, an organic solvent such as N-methyl-2- pyrolidone can be used.

(c) Separator

A separator is put between the positive electrode and the negative electrode. The separator separates the positive electrode and the negative electrode and holds the electrolyte. A thin film such as polyethylene or polypropylene having many fine pores can be used.

(d) Non-aqueous electrolyte

The non-aqueous electrolyte is obtained by dissolving lithium salt as a supporting electrolyte in the organic solvent.

As the organic solvent, at least one kind selected from: cyclic carbonates such as ethylene carbonate, propylene carbonate, butylene carbonate, and trifluoropropylene carbonate; chain carbonates such as diethyl carbonate, dimethyl carbonate, ethylmethyl carbonate, and dipropyl carbonate; ether compounds such as tetrahydrofuran, 2-methyltetrahydrofuran, and dimethoxyethane; sulfur compounds such as ethylmethylsulfone, and butanesulfone; and phosphorus compounds such as triethyl phosphate, and trioctyl phosphate can be used singly or in a mixture of two or more kinds.

As the supporting electrolyte, $LiPF_6$, $LiBF_4$, $LiClO_4$, $LiAsF_6$, $LiN(CF_3SO_2)_2$, and complex salts thereof can be used.

Moreover the non-aqueous electrolyte may contain a radical scavenger, a surfactant, and a flame retardant.

(e) Battery shape and configuration

The shape of the non-aqueous electrolyte secondary battery of the present invention formed by the positive electrode, the negative electrode, the separator, and the non-aqueous electrolyte as described above, can be various shapes such as a cylindrical type or a laminated type.

In any case, the positive electrode and the negative electrode are laminated via the separator to form an electrode assembly, the non-aqueous electrolyte is impregnated in the obtained electrode assembly, the positive electrode collector and a positive terminal leading to the outside, and the negative electrode collector and a negative terminal leading to the outside are connected to each other by using a current collecting lead or the like, and the assembly is sealed in a battery case, to thereby complete the non-aqueous electrolyte secondary battery.

<u>Examples</u>

(Example 1)

Nickel sulfate (manufactured by Wako Pure Chemical Industries, Ltd., special grade chemicals) and cobalt sulfate (manufactured by Wako Pure Chemical Industries, Ltd., special grade chemicals) were mixed together so that a molar ratio of Ni/Co became 0.83/0.17, and the mixture was dissolved in pure water to obtain an aqueous solution. 25% ammonia aqueous solution (manufactured by Wako Pure Chemical Industries, Ltd., special grade chemicals) was dropped little by little into the aqueous solution, to cause a reaction in a range of pH of from 11 to 13 and a temperature of from 40 to 50°C, to thereby obtain a hydroxide of spherical secondary particles expressed by $Ni_{0.83}Co_{0.17}(OH)_2$.

After $NaAlO_2$ (manufactured by Wako Pure Chemical Industries, Ltd., special grade chemicals) was added so that a molar ratio of Al/(Ni+Co+Al) became 0.03, while the obtained hydroxide was put in water and stirred, sulfuric acid was used to neutralize the hydroxide so that the pH became 9.5. The composition of hydroxide after neutralization was $(Ni_{0.83}Co_{0.17})_{0.97}Al_{0.03}(OH)_2$.

Next the obtained hydroxide was roasted in an electric furnace (manufactured by ADVANTEC, electric muffle furnace, TOKU FUM373) at 700°C in an air atmosphere, to obtain an oxide. The obtained oxide and lithium hydroxide were mixed together so that a molar ratio of Li/(Ni+Co+Al) became 1.06, and blended by using a shaker mixer (manufactured by Willy A. Bachofen AG, TURBULA ®Type T2C) to obtain a mixture.

The mixture was further baked at 730°C in an oxygen atmosphere by using the above described electric furnace, to obtain a positive electrode active material. The obtained positive electrode active material was subjected to X-ray diffraction measurement to measure the Li site occupancy and the metal site occupancy according to the Rietveld analysis.

The X-ray diffraction measurement was performed by using an X-ray diffracting device (manufactured by Rigaku Corporation, type RAD-rVB) using Cu-K$\alpha$ rays. The Rietveld analysis was performed by using the obtained X-ray diffraction pattern. Diffraction software "RIETAN94" (free ware) was used for the Rietveld analysis.

The Li site occupancy and the metal site occupancy obtained by the Rietveld analysis are shown in Table 1.

Moreover, respective positive electrode active materials were used to prepare a winding type lithium secondary battery in the following manner, and battery output was measured.

At first the positive electrode active material at 25°C, the conductive material comprising carbon black, and the binding agent comprising polyvinylidene fluoride (PVDF) were mixed at a mass ratio of 85:10:5, and dissolved in N-methyl-2- pyrolidone (NMP) solution, to thereby prepare the positive electrode mixture paste. The obtained positive electrode mixture paste was applied on opposite faces of an aluminum foil by a comma coater, and heated and dried at 100°C, to thereby obtain a positive electrode. The obtained positive electrode was put into a roll press to apply a load, to thereby prepare a positive electrode sheet having improved electrode density.

Subsequently, a negative electrode active material comprising graphite, and PVDF as a binding agent were dissolved in an NMP solution at a mass ratio of 92.5:7.5, to obtain a negative electrode mixture paste. The obtained negative electrode mixture paste was applied on opposite faces of a copper foil by the comma coater as in the positive electrode, and dried at 120°C, to thereby obtain a negative electrode. The obtained negative electrode was put into the roll press to apply a load, to thereby prepare a negative electrode sheet having improved electrode density.

The obtained positive electrode sheet and negative electrode sheet were wound via a separator formed of a microporous polyethylene sheet having a thickness of 25 $\mu$m, to form a roll type electrode assembly. The roll type electrode assembly was inserted into the battery case in a state with a lead tab provided respectively in the positive electrode sheet and the negative electrode sheet and joined to the positive electrode terminal and the negative electrode terminal, respectively.

Then $LiPF_6$ as the lithium salt was dissolved in an organic solvent comprising a mixed solution of ethylene carbonate (EC) and diethylene carbonate (DEC) mixed at a volume ratio of 3:7, so as to be 1 mol/dm$^3$ in the electrolyte, to thereby prepare the electrolyte.

The obtained electrolyte was poured into the battery case, in which the roll type electrode assembly was inserted, and an opening part of the battery case was closed, to thereby seal the battery case.

The prepared battery was left standing for about 24 hours. After an open circuit voltage OCV became stable, the battery was charged up to a cutoff voltage of 4.3V at a current density of 0.5 mA/cm$^2$ with respect to the positive electrode, to obtain an initial charging capacity. A capacity at the time of discharging the battery down to a cutoff voltage of 3.0V after one hour suspension was designated as an initial discharging capacity.

Battery output of the lithium secondary battery using the positive electrode active material was measured in the manner described below.

The voltage of the prepared battery was adjusted to a predetermined voltage (for example, SOC 60%), to calculate the battery output based on a slope of current/voltage characteristics in pulse charging and discharging. The rate of the current value was changed, for example, to 1, 2, 5, and 15C, to measure the voltage within a predetermined time after energization for 1 to 30 seconds, and the current-voltage relation was plotted to make a graph, thereby obtaining an inclination (R). The maximum rate at that time, that is, the current value was designated as Imax.

The battery output (W) was calculated based on Imax and R obtained by measurement, using equation 1 below.

$$\text{Equation 1: } W = \text{Imax} \cdot 2R$$

A battery output ratio was calculated, assuming that the battery output in Comparative Example 1 described below as the conventional art was 100%.

The obtained battery output ratio and the initial discharging capacity are shown in Table 1.

(Examples 2 to 4, Comparative Examples 1 to 3)

Other than mixing the oxide and the lithium hydroxide so that the molar ratio of Li/(Ni+Co+Al) became as shown in Table 1, the positive electrode active material was obtained in the same manner as in Example 1, and evaluation was performed. Evaluation results are also shown in Table 1.

[Table 1]

| | Li/M ratio | Li site occupancy (%) | Metal site occupancy (%) | Battery output ratio (%) | Initial discharging capacity (mA/g) |
|---|---|---|---|---|---|
| Example 1 | 1.06 | 98.6 | 97.7 | 105 | 173 |
| Example 2 | 1.07 | 98.7 | 97.6 | 108 | 173 |
| Example 3 | 1.08 | 99.1 | 97.3 | 111 | 178 |
| Example 4 | 1.09 | 99.3 | 97.2 | 117 | 178 |
| Comparative example 1 | 1.05 | 98.7 | 99.2 | 100 | 172 |
| Comparative example 2 | 1.03 | 97.6 | 99.5 | 73 | 160 |
| Comparative example 3 | 1.20 | 99.8 | 94.8 | 70 | 178 |

In the positive electrode active material in Examples 1 to 4 of the present invention, as shown in Table 1, the Li site occupancy of the Li site in the crystal by Rietveld analysis is 98.5% or more, and the metal site occupancy of the metal site is from 95% to 98% inclusive. It is seen that the output characteristic of the obtained lithium secondary battery can be improved by 5 to 17% more than in the Comparative Examples. In Comparative Example 2, the Li site occupancy is low and the metal site occupancy becomes too high, thereby decreasing the output characteristic. In Comparative Example 3, the Li site occupancy is high and the metal site occupancy becomes too low. Therefore, although the initial discharging capacity is high, the output characteristic becomes low.

Industrial Applicability

The non-aqueous electrolyte secondary battery of the present invention having a high charging and discharging capacity and a high output is suitable for a power source of small portable electronic equipment (notebook personal computer, mobile phone terminal, and the like) requiring high capacity at all times.

Moreover, in a battery requiring high output such as a power source for an electric vehicle, high output of the battery can be achieved by using the positive electrode active material for the non-aqueous electrolyte secondary battery of the present invention. The non-aqueous electrolyte secondary battery of the present invention is also suitable for the power source for the electric vehicle. The present invention is applicable not only to the power source for an electric vehicle driven purely by electric energy, but also to the power source for a so-called hybrid vehicle using this together with a combustion engine such as a gasoline engine or a diesel engine.

**Claims**

1. A positive electrode active material for a non-aqueous electrolyte secondary battery, which is expressed by the general formula: $Li_xNi_{1-y}Co_y)_{1-z}M_zO_2$ ($0.98 \leq x \leq 1.10$, $0.05 \leq y \leq 0.4$, $0.01 \leq z \leq 0.2$, M = at least one element selected from the group of Al, Zn, Ti and Mg), and which has a Li site occupancy of the Li site in crystal of 98.5% or more, and a metal site occupancy of the metal site of from 95% to 98% inclusive, obtained by Rietveld analysis.

2. A non-aqueous electrolyte secondary battery in which the positive electrode active material for the secondary battery according to claim 1 is used as a positive electrode.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000030693 A
- JP 2004171961 A

- JP 2006107845 A